# EUROPEAN PATENT SPECIFICATION

(11) **EP 4 299 363 B1**
(45) Date of publication and mention of the grant of the patent: **01.04.2026**
(21) Application number: 21938454.2
(22) Date of filing: 30.04.2021
(51) Int. Cl.: B60L 53/14, H02J 7/00

(54) **CHARGER, SOFT START METHOD, ELECTRIC VEHICLE, AND CHARGING SYSTEM**
LADEGERÄT, SANFTANLAUFVERFAHREN, ELEKTROFAHRZEUG UND LADESYSTEM
CHARGEUR, PROCÉDÉ DE DÉMARRAGE PROGRESSIF, VÉHICULE ÉLECTRIQUE ET SYSTÈME DE CHARGE

(43) Date of publication of application: 03.01.2024
(73) Proprietor: Huawei Digital Power Technologies Co., Ltd., Shenzhen, Guangdong 518043 (CN)
(72) Inventor: CHENG, Yang, Shenzhen, Guangdong 518129 (CN); SU, Feng, Shenzhen, Guangdong 518129 (CN); MA, Yu, Shenzhen, Guangdong 518129 (CN)
(74) Representative: Gill Jennings & Every LLP
(86) International application number: PCT/CN2021/091404
(87) International publication number: WO 2022/226980

(56) References cited:
- WO-A1-2014/119374
- CN-A- 105 922 885
- CN-A- 106 100 059
- CN-A- 106 877 472
- JP-A- 2016 059 084
- US-A1- 2019 202 300

## Description

### TECHNICAL FIELD

This application relates to the field of electric vehicle technologies, and in particular, to a charger, a soft-start method, an electric vehicle, and a charging system.

### BACKGROUND

With development of new energy technologies, electric vehicles have received increasingly extensive attention. An on-board charger (on-board charger, OBC) and a power battery are disposed in the electric vehicle. The OBC may receive charging electric energy provided by a charging pile, and convert a voltage of the charging electric energy, so that a converted voltage of the charging electric energy can adapt to the power battery. Further, the power battery may receive and store the charging electric energy converted by the OBC. For the electric vehicle in motion, the power battery may release the stored charging electric energy, to provide an energy source for the electric vehicle in motion.

Usually, a bus capacitor is disposed in the OBC, and the bus capacitor may filter the charging electric energy transmitted in the OBC. Due to the existence of the bus capacitor, a large instantaneous current is directly input to the bus capacitor at a moment when the OBC and the charging pile start to work. The instantaneous current may damage the OBC. Therefore, a soft-start circuit is further disposed in each of most OBCs, to reduce an access current between the OBC and the charging pile.

However, disposing the soft-start circuit in the OBC increases circuit complexity of the OBC, and is not conducive to miniaturization of the OBC. Therefore, a soft-start solution between the charging pile and the OBC needs to be further studied.

US2019/0202300A1 relates to pre-charging the DC link capacitor of an on-board charger (OBC) of an electric vehicle.

### SUMMARY

This application provides a charger, a soft-start method, an electric vehicle, and a charging system. The charger can implement soft-start without disposing a soft-start circuit, which helps simplify a circuit structure of the charger, and further facilitates miniaturization of the charger.

According to a first aspect, this application provides a charger in accordance with appended claim 1.

For example, the charger may be an OBC in an electric vehicle. Before receiving the charging electric energy output by the charging pile, the charger provided in this application may precharge the first capacitor by using the battery electric energy provided by the battery system, so that the capacitance voltage of the first capacitor reaches a voltage that is close to the charging electric energy input to the DC-DC conversion circuit. In this case, the charger indicates the charging pile to start charging. Because the capacitance voltage of the first capacitor has been precharged to the first threshold voltage, the capacitance voltage of the first capacitor is closer to the voltage of the charging electric energy input to the DC-DC conversion circuit. Therefore, at the moment of starting charging, an instantaneous current flowing into the first capacitor is suppressed, which helps protect the charger. A soft-start circuit does not need to be disposed in the soft-start process of the charger in this application, which helps simplify a circuit of the charger, and further facilitates miniaturization of the charger.

In this application, the first threshold voltage may be any voltage within a rated input voltage range between the first high potential end and the first low potential end of the DC-DC conversion circuit. The charger in this application may support alternating current charging electric energy, or may support direct current charging electric energy. Details are as follows:

In a possible implementation, the charging electric energy output by the charging pile is alternating current electric energy. In this case, the charger may further include a rectifier circuit, one end of the rectifier circuit is configured to receive the charging electric energy output by the charging pile, and the other end of the rectifier circuit is connected to the DC-DC conversion circuit. The rectifier circuit may convert the received charging electric energy from the alternating current electric energy into direct current electric energy, and output the converted charging electric energy to the DC-DC conversion circuit.

The rectifier circuit is disposed to rectify the charging electric energy output by the charging pile, so that the charger can charge the battery in the battery system by using the alternating current charging electric energy. Currently, common alternating current electric energy mainly includes a single-phase alternating current and a three-phase alternating current. For example, when the charging electric energy output by the charging pile is a single-phase alternating current, the first threshold voltage is greater than or equal to a peak voltage of the charging electric energy output by the charging pile. An uncontrolled rectifier voltage of the rectifier circuit for the single-phase alternating current is a peak voltage of the single-phase alternating current. Currently, most rectifier circuits further have a voltage boosting function. Therefore, an output voltage of the rectifier circuit is usually greater than or equal to the peak voltage of the single-phase alternating current. In view of this, when the charging electric energy output by the charging pile is the single-phase alternating current, the first threshold voltage in this application is greater than or equal to the peak voltage of the charging electric energy, which helps enable precharged voltage of the first capacitor to be closer to the output voltage of the rectifier circuit, to further reduce a value of an instantaneous current.

Similarly, when the charging electric energy output by the charging pile is a three-phase alternating current, the first threshold voltage is greater than or equal to a peak voltage of a line voltage of the charging electric energy output by the charging pile. An uncontrolled rectifier voltage of the rectifier circuit for the three-phase alternating current is a peak voltage of a line voltage of the three-phase alternating current. When the charging electric energy output by the charging pile is the three-phase alternating current, the first threshold voltage in this application is greater than or equal to the peak voltage of the line voltage of the charging electric energy, which helps enable the precharged voltage of the first capacitor to be closer to the output voltage of the rectifier circuit, to further reduce the value of the instantaneous current.

In another possible implementation, the charging electric energy output by the charging pile is direct current electric energy, and in this case, the first threshold voltage is a voltage of the charging electric energy output by the charging pile. When the charging electric energy output by the charging pile is the direct current electric energy, a voltage of the first capacitor may reach an output voltage of the charging pile through precharging, which helps suppress an instantaneous current input to the first capacitor.

According to a second aspect, this application provides a charger soft-start method in accordance with appended claim 6.

For example, the charger soft-start method provided in this application mainly includes the following steps: The control module may first control the DC-DC conversion circuit to charge the first capacitor by using battery electric energy output by the battery system; and send first indication information to a charging pile after a capacitance voltage of the first capacitor reaches a first threshold voltage, where the first indication information may indicate the charging pile to output the charging electric energy.

In this application, the first threshold voltage may be any voltage within a rated input voltage range between the first high potential end and the first low potential end of the DC-DC conversion circuit. The charger in this application may support alternating current charging electric energy, or may support direct current charging electric energy. Details are as follows:

In a possible implementation, the charging electric energy output by the charging pile is alternating current electric energy. In this case, the charger may further include a rectifier circuit, one end of the rectifier circuit is configured to receive the charging electric energy output by the charging pile, and the other end of the rectifier circuit is connected to the DC-DC conversion circuit. The rectifier circuit may convert the received charging electric energy from the alternating current electric energy into direct current electric energy, and output the converted charging electric energy to the DC-DC conversion circuit.

Currently, common alternating current electric energy mainly includes a single-phase alternating current and a three-phase alternating current. For example, when the charging electric energy output by the charging pile is a single-phase alternating current, the first threshold voltage is greater than or equal to a peak voltage of the charging electric energy output by the charging pile. When the charging electric energy output by the charging pile is a three-phase alternating current, the first threshold voltage is greater than or equal to a peak voltage of a line voltage of the charging electric energy output by the charging pile.

In another possible implementation, the charging electric energy output by the charging pile is direct current electric energy, and in this case, the first threshold voltage is a voltage of the charging electric energy output by the charging pile.

According to a third aspect, this application provides an electric vehicle in accordance with appended claim 11.

These aspects or other aspects of this application are more concise and easier to understand in descriptions of the following embodiments.

### BRIEF DESCRIPTION OF DRAWINGS

FIG. 1 is a schematic diagram of an architecture of a charging system of an electric vehicle;
FIG. 2 is a schematic diagram of a structure of an OBC;
FIG. 3 is a schematic diagram of a structure of a PFC circuit;
FIG. 4 is a schematic diagram of a voltage change between an OBC and a charging pile in a soft-start process;
FIG. 5 is a schematic diagram of a structure of another OBC;
FIG. 6 is a schematic diagram of a structure of a charger according to an embodiment of this application;
FIG. 7 is a schematic flowchart of a charger soft-start method according to an embodiment of this application;
FIG. 8 is a schematic diagram of a structure of a charger according to an embodiment of this application;
FIG. 9 is a schematic diagram of a voltage change between an OBC and a charging pile in a soft-start process according to an embodiment of this application; and
FIG. 10 is a schematic diagram of a structure of a charger according to an embodiment of this application.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". A term "and/or" describes an association relationship between associated objects and indicates that three relationships may exist. For example, A and/or B may indicate the following three cases: Only A exists, both A and B exist, and only B exists. In addition, a character "/" generally indicates an "or" relationship between the associated objects unless otherwise specified. In addition, it should be understood that in the description of this application, terms such as "first" and "second" are merely used for distinguishing and description, but should not be understood as indicating or implying relative importance, or should not be understood as indicating or implying a sequence.

It should be noted that a "connection" in embodiments of this application may be understood as an electrical connection, and the connection between two electrical elements may be a direct or indirect connection between the two electrical elements. For example, a connection between A and B may indicate that A and B are directly connected to each other, or A and B are indirectly connected to each other by using one or more other electrical elements. For example, the connection between A and B may also indicate that A is directly connected to C, C is directly connected to B, and A and B are connected to each other through C. In some scenarios, the "connection" may also be understood as coupling, for example, electromagnetic coupling between two inductors. In a word, A and B are connected, so that electric energy can be transmitted between A and B.

The following clearly describes technical solutions in embodiments of this application with reference to accompanying drawings in embodiments of this application.

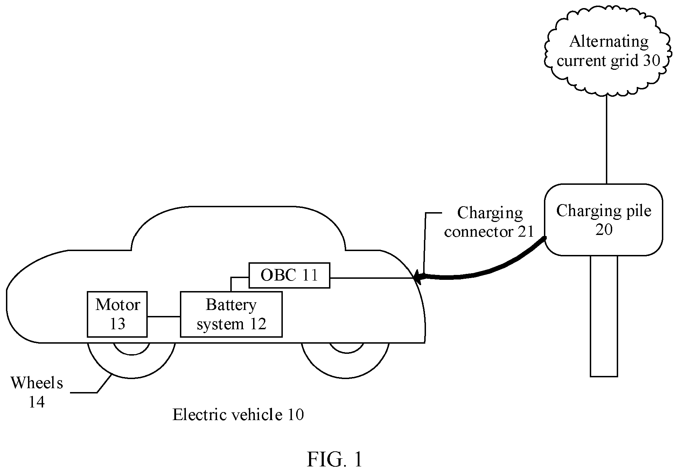

An electric vehicle is a vehicle driven by electric energy. FIG. 1 is a schematic diagram of an architecture of a charging system of an electric vehicle. As shown in FIG. 1, an electric vehicle 10 mainly includes an on-board charger OBC 11, a battery system 12, a motor 13, and wheels 14. The battery system 12 may include a power battery with a large capacity and high power. When the electric vehicle 10 drives, the power battery may supply power to the motor 13, and the motor 13 may further drive the wheels 14 to rotate, thereby implementing movement of the vehicle.

When the electric vehicle 10 is charged, a charging pile 20 usually may be used to charge the electric vehicle 10. As shown in FIG. 1, the charging pile 20 includes a charging connector 21. The charging connector 21 is inserted into a charging port of the electric vehicle 10, so that the charging pile 20 is electrically connected to the OBC 11, that is, the charging pile 20 is connected to the electric vehicle 10. As shown in FIG. 1, the charging pile 20 is connected to an alternating current grid 30. After being connected to the electric vehicle 10, the charging pile 20 may provide charging electric energy for the electric vehicle 10 based on alternating current energy received from the alternating current grid 30.

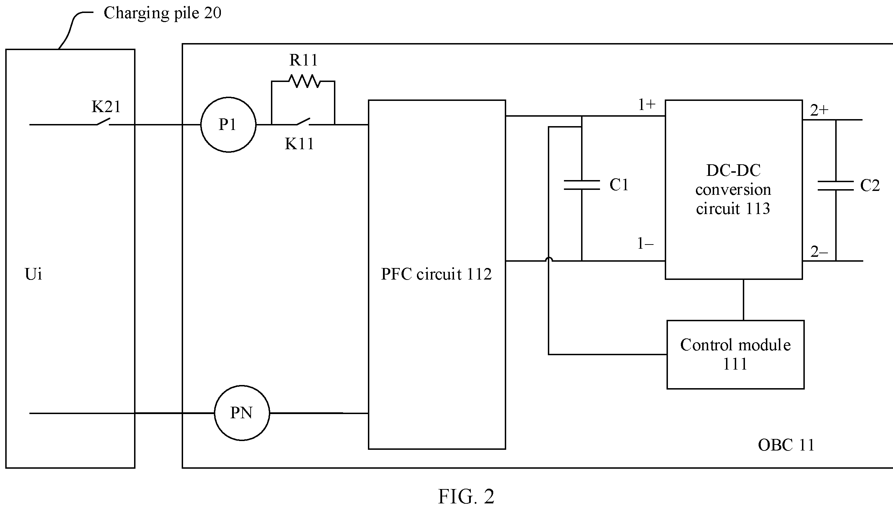

The OBC 11 may perform modulation, for example, voltage conversion and rectification, on the received charging electric energy, so that the charging electric energy can adapt to the power battery in the battery system 12. The power battery may further store charging electric energy modulated by the OBC 11. FIG. 2 is a schematic diagram of an example structure of the OBC 11. As shown in FIG. 2, the OBC 11 mainly includes a control module 111, a power factor correction (power factor correction, PFC) circuit 112, and a direct current-direct current (direct current-direct current, DC-DC) conversion circuit 113.

The control module 111 is connected to the DC-DC conversion circuit 113, and the control module 111 may control the DC-DC conversion circuit 113 to work. For example, the control module 111 may be any one of a micro processing unit (micro processing unit, MCU), a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or the like inside the OBC 11, or may be any one or a combination of another programmable logic device, a transistor logic device, or a hardware component.

The charging electric energy output by the charging pile 20 may be alternating current electric energy, or may be direct current electric energy. For example, as shown in FIG. 2, if the charging pile 20 outputs unidirectional alternating current electric energy, the PFC circuit 112 may receive the unidirectional alternating current charging electric energy, and rectify the alternating current charging electric energy, that is, perform alternating current-direct current conversion, to obtain direct current charging electric energy. The PFC circuit 112 outputs the direct current charging electric energy to the DC-DC conversion circuit 113. The DC-DC conversion circuit 113 may perform direct current-direct current conversion on the received direct current charging electric energy under control of the control module 111, so that a voltage of the direct current charging electric energy can adapt to the power battery in the battery system 12. The DC-DC conversion circuit 113 may further output the converted charging electric energy to the power battery in the battery system 12, so that the power battery can be charged.

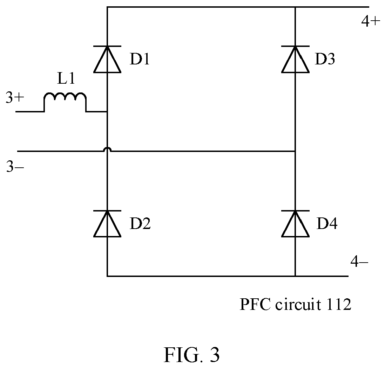

For example, the PFC circuit 112 may be an uncontrolled rectifier circuit, that is, the PFC circuit 112 includes rectifier diodes without a control function, and a rectification process of the PFC circuit 112 is not controlled by the control module 111. For example, FIG. 3 is a schematic diagram of an example structure of a PFC circuit. In this example, the PFC circuit 112 may be a bridge rectifier circuit that includes four diodes without a control function, that is, a diode D1, a diode D2, a diode D3, and a diode D4. An anode of the diode D1 is connected to a cathode of the diode D2, and is further connected to an alternating current end 3+. A cathode of the diode D1 is connected to a direct current end 4+ of the PFC circuit 112. An anode of the diode D2 is connected to a direct current end 4- of the PFC circuit 112. An anode of the diode D3 is connected to a cathode of the diode D4, and is further connected to an alternating current end 3-. A cathode of the diode D3 is connected to the direct current end 4+ of the PFC circuit 112. An anode of the diode D4 is connected to the direct current end 4- of the PFC circuit 112.

Based on the PFC circuit 112 shown in FIG. 3, when the charging electric energy received by the PFC circuit 112 is in a positive half cycle, the alternating current end 3+ is a high potential end, and the alternating current end 3- is a low potential end. In this case, the diode D1 and the diode D4 are switched on, and the diode D2 and the diode D3 are switched off, so that the direct current end 4+ is a high potential end, and the direct current end 4- is a low potential end. When the charging electric energy received by the PFC circuit 112 is in a negative half cycle, the alternating current end 3+ is a low potential end, and the alternating current end 3- is a high potential end. In this case, the diode D2 and the diode D3 are switched on, and the diode D1 and the diode D4 are switched off, so that the direct current end 4+ is a high potential end, and the direct current end 4- is a low potential end. It can be learned that, regardless of whether the charging electric energy received by the PFC circuit 112 is in the positive half cycle or the negative half cycle, the direct current end 4+ is always the high potential end, and the direct current end 4- is always the low potential end. In other words, no reversal of a voltage direction occurs between the direct current end 4+ and the direct current end 4- of the PFC circuit 112, and the PFC circuit 112 may output the direct current electric energy.

Usually, the PFC circuit 112 may also receive the direct current charging electric energy. In this case, the PFC circuit 112 may directly output the received direct current charging electric energy. For example, still refer to FIG. 2 and FIG. 3. If the charging electric energy output by the charging pile 20 is the direct current electric energy, the alternating current end 3+ is always the high potential end, and the alternating current end 3- is always the low potential end, so that the diode D1 and the diode D4 always remain switched on, and the diode D2 and diode D3 always remain switched off. In this way, the direct current end 4+ is always the high potential end, and the direct current end 4- is always the low potential end. The PFC circuit 112 may directly output the received direct current charging electric energy to the DC-DC conversion circuit 113.

It should be understood that the foregoing PFC circuit 112 being the uncontrolled rectifier circuit is merely an example for description. In some scenarios, the PFC circuit 112 may alternatively be a controllable rectifier circuit, that is, the PFC circuit 112 may alternatively include switching transistors having a control function, for example, a bridge rectifier circuit including four switching transistors. In this case, a rectifier function of the PFC circuit 112 may be implemented by controlling switch-on and switch-off of the switching transistors by the control module 111, and the switch-on and switch-off of the switching transistors may be synchronized with the switch-on and switch-off of the diodes in the foregoing example. That is, the switching transistors may implement the functions the diodes in FIG. 3 under the control of the control module 111, so that the PFC circuit 112 can rectify the received alternating current electric energy.

It should be understood that a specific implementation of the PFC circuit 112 is not limited in this embodiment of this application. For example, as shown in FIG. 3, the PFC circuit 112 may further include a boost inductor L1, so that the PFC circuit 112 may further implement voltage boosting while implementing the rectification. For specific implementation, refer to the conventional technology, and details are not described again in this embodiment of this application.

As shown in FIG. 2, a capacitor C1 is further disposed between the PFC circuit 112 and the DC-DC conversion circuit 113, and the capacitor C1 may also be referred to as a bus capacitor. Specifically, one end of the capacitor C1 is connected to a high potential end 1+ of the DC-DC conversion circuit 113, and the other end of the capacitor C1 is connected to a low potential end 1- of the DC-DC conversion circuit 113. The capacitor C1 may filter the direct current charging electric energy received by the DC-DC conversion circuit 113, to reduce a loss of the DC-DC conversion circuit 113.

As shown in FIG. 2, the OBC 11 includes a port P1 and a port PN. The port P1 is configured to connect to a live wire of the charging pile 20, and the port PN is configured to connect to a neutral wire of the charging pile 20. Therefore, the OBC 11 may receive, through the port P1 and the port PN, the charging electric energy output by the charging pile 20. The charging electric energy may usually be a single-phase alternating current. In a mains supply in China, a peak voltage of the single-phase alternating current can usually reach 311 V. However, due to the existence of the capacitor C1, at the moment when the charging pile 20 outputs the charging electric energy, a large instantaneous current is input from the port P1 because a voltage of the capacitor C1 is low, that is, a voltage difference between the direct current end and the alternating current end of the PFC circuit 112 is large. After being transmitted by the PFC circuit 112, the instantaneous current charges the capacitor C1. That is, at the moment when the charging pile 20 starts to charge the electric vehicle 10, the large instantaneous current is input to the OBC 11. It may be understood that if the instantaneous current between the charging pile 20 and the OBC 11 is excessively large, the OBC 11 may be damaged. Therefore, currently, the charging is mostly started between the charging pile 20 and the OBC 11 in a soft-start manner.

For example, as shown in FIG. 2, a soft-start circuit is disposed in the OBC 11. The soft-start circuit mainly includes a switch K11 and a resistor R11. A first end of the switch K11 is connected to the port P1, and a second end of the switch K11 is connected to the PFC circuit 112. A resistor R11 is connected in parallel between the first end and the second end of the switch K11. It should be noted that a control end of the switch K11 may further be connected to the control module 111. To simplify the accompanying drawings, a specific connection manner is not shown in this embodiment of this application.

Correspondingly, the charging pile 20 may further include a switch K21. The switch K21 is disposed on the live wire of the charging pile 20. When the charging pile 20 is switched on, the charging pile 20 may output the charging electric energy. When the switch K21 is switched off, the charging pile 20 cannot output the charging electric energy.

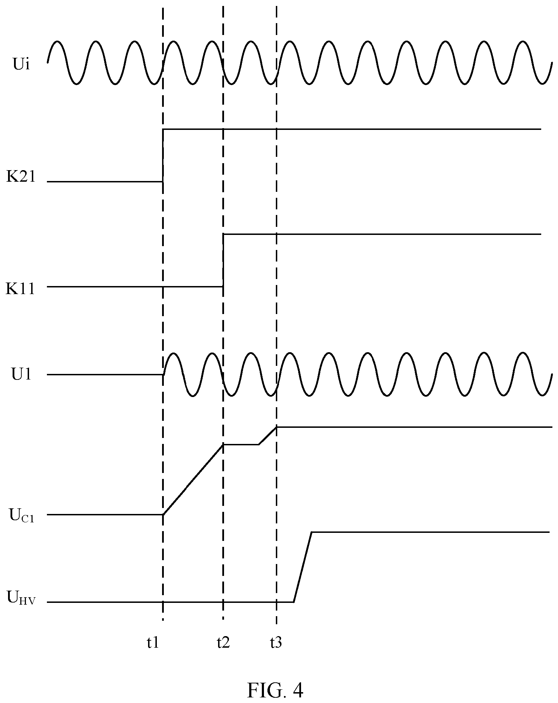

FIG. 4 is a schematic diagram of an example of a voltage change between the OBC 11 and the charging pile 20 in a soft-start process. Ui indicates a voltage of charging electric energy that can be output by the charging pile 20, and the voltage of the charging electric energy is a single-phase sine wave. It should be noted that an output voltage of the charging pile 20 is not exactly the same as Ui. When the switch K21 is switched on, the charging pile 20 may output the charging electric energy to the OBC 11. Therefore, the output voltage of the charging pile 20 may be Ui. When the switch K21 is switched off, the charging pile 20 cannot output the charging electric energy to the OBC 11. Therefore, the output voltage of the charging pile 20 may be 0.

Further, still refer to FIG. 2 and FIG. 4. A rising edge of a line K21 in FIG. 4 indicates that the switch K21 in FIG. 2 is switched on, a rising edge of a line K1 in FIG. 4 indicates that the switch K11 in FIG. 2 is switched on, a line U1 in FIG. 4 corresponds to a voltage change line of the charging electric energy received by the PFC circuit 112 in FIG. 2, that is, a change line of an input voltage of the PFC circuit 112, a line U_{C1} in FIG. 4 corresponds to a voltage change line of the capacitor C1 in FIG. 2, and a line U_{HV} in FIG. 4 corresponds to a voltage change line of a capacitor C2 in FIG. 2. One end of the capacitor C2 is connected to a high potential end 2+ of the DC-DC conversion circuit 113, and the other end of the capacitor C2 is connected to a low potential end 2- of the DC-DC conversion circuit 113. The capacitor C2 may filter the direct current charging electric energy output by the DC-DC conversion circuit 113 to the power battery.

As shown in FIG. 4, the soft-start process mainly includes the following three time points:

### Time point t1:

The switch K21 is switched on, and the switch K11 remains switched off. Because the switch K21 is switched on, the charging pile 20 may output the alternating current charging electric energy to the OBC 11, so that the input voltage U1 of the PFC circuit 112 synchronously changes to a sine wave. Because the switch K11 remains switched off, after being transmitted through the resistor R11 and the PFC circuit 112, the instantaneous current input to the OBC 11 is input to the capacitor C1, so that the voltage U_{C1} of the capacitor C1 gradually increases. Due to a current limiting function of the resistor R11, the resistor R11 can reduce a value of the instantaneous current, thereby helping protect the OBC 11.

### Time point t2:

In the soft-start process, the control module 111 may detect the voltage U_{C1} of the capacitor C1, and switch on the switch K11 when the U_{C1} reaches a first threshold voltage. It is assumed that U_{C1} reaches the first threshold voltage at the time point t2, and the control module 111 may switch on the switch K11 at the time point t2. Because the voltage U_{C1} of the capacitor C1 reaches the first threshold voltage, the voltage difference between the alternating current end and the direct current end of the PFC circuit 112 is small. In this case, even if the switch K11 is switched on, no large instantaneous current is generated. In addition, after the switch K11 is switched on, the resistor R11 is short-circuited, that is, the PFC circuit 112 may receive, by using the switch K11, the charging electric energy provided by the charging pile 20.

The first threshold voltage may be any voltage within a rated input voltage range between the high potential end 1+ and the low potential end 1- of the DC-DC conversion circuit 113. For example, the first threshold voltage may alternatively be any voltage not lower than an uncontrolled rectifier voltage of the PFC circuit 112. When the charging electric energy received by the PFC circuit 112 is a single-phase alternating current, the uncontrolled rectifier voltage of the PFC circuit 112 may be understood as a peak voltage of the single-phase alternating current. For example, for a single-phase alternating current with a valid voltage of 220 V, the uncontrolled rectifier voltage of the PFC circuit 112 is 310 V When the charging electric energy received by the PFC circuit 112 is a three-phase alternating current, the uncontrolled rectifier voltage of the PFC circuit 112 may be understood as a peak voltage of a line voltage of the three-phase alternating current. For example, for a three-phase alternating current with a valid voltage of 220 V, the uncontrolled rectifier voltage of the PFC circuit 112 is 658 V.

After the time point t2, the PFC circuit 112 may start rectifying the received alternating current electric energy. As shown in FIG. 4, after the time point t2, the voltage U_{C1} of the capacitor C1 remains unchanged for a period of time, and the period of time may be understood as a delay in starting the rectification by the PFC circuit 112.

In some PFC circuits 112, as shown in FIG. 3, the PFC circuit 112 may further be compatible with a boost (boost) circuit (that is, including a boost inductor L1). The boost circuit may cause an actual output voltage of the PEF circuit 112 to be greater than the uncontrolled rectifier voltage of the PFC circuit 112. Therefore, as shown in FIG. 4, after the PFC circuit 112 starts the rectification, the PFC circuit 112 may output the direct current charging electric energy, so that the voltage U_{C1} of the capacitor C1 is further increased.

### Time point t3:

After the voltage U_{C1} of the capacitor C1 reaches a third threshold voltage, the control module 111 may control the DC-DC conversion circuit 113 to start working. It is assumed that the voltage U_{C1} of the capacitor C1 reaches the third threshold voltage at the time point t3, and the control module 111 may control the DC-DC conversion circuit 113 to start working at the time point t3.

The third threshold voltage may be a voltage adapting to a target output voltage of the DC-DC conversion circuit 113, that is, the DC-DC conversion circuit 113 may convert the third threshold voltage into the target output voltage. For example, it is assumed that the power battery may receive 800 V charging electric energy, and the target output voltage of the DC-DC conversion circuit 113 may be 800 V. In this case, if a transformation ratio of the DC-DC conversion circuit 113 is 2, the third threshold voltage may be 400 V Therefore, when the voltage U_{C1} of the capacitor C1 reaches 400 V, the DC-DC conversion circuit 113 can convert the voltage of the charging electric energy from 400 V to 800 V adapting to the power battery.

As shown in FIG. 4, after the time point t3. the voltage U_{HV} of the capacitor C2 remains unchanged for a period of time, and the period of time may be understood as a delay in starting the voltage conversion by the DC-DC conversion circuit 113. After the DC-DC conversion circuit 113 starts the voltage conversion, the DC-DC conversion circuit 113 may output the direct current charging electric energy, so that the voltage U_{HV} of the capacitor C2 is rapidly increased until the voltage adapting to the power battery is reached.

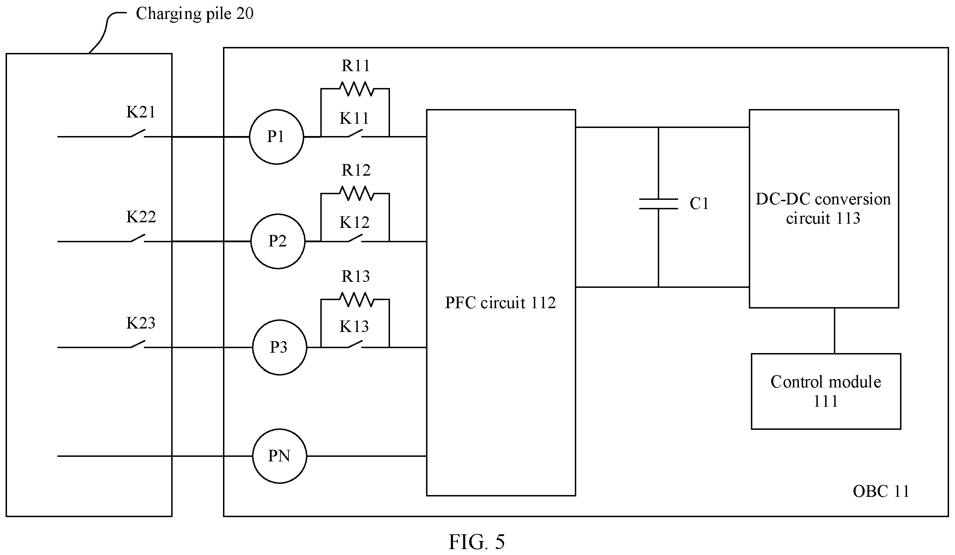

It can be learned that, by disposing the soft-start circuit in the OBC 11, soft-start can be implemented between the charging pile 20 and the OBC 11. However, the disposing of the soft-start circuit also increases complexity of a circuit structure of the OBC 11. Especially in a three-phase charging scenario, a quantity of components and an occupied board area of the slow-start circuit in the OBC 11, and complexity of a circuit structure of the OBC 11 may further increase. Specifically, as shown in FIG. 5, in a three-phase charging scenario, the OBC 11 includes the port P1, a port P2, and a port P3. Correspondingly, the charging pile 20 includes the switch K21, a switch K22, and a switch K23. In the OBC 11, the port P1 is connected to a soft-start circuit including the switch K11 and the resistor R11, the port P2 is connected to a soft-start circuit including a switch K12 and a resistor R12, and the port P3 is connected to a soft-start circuit including a switch K13 and a resistor R13. Compared with the single-phase electric charging scenario shown in FIG. 2, a quantity of components and an occupied board area of the slow-start circuits in the OBC 11, and complexity of a circuit structure of the OBC 11 in the three-phase charging scenario further increase.

It can be learned that, by disposing the soft-start circuit in the OBC 11, soft-start can be implemented between the OBC 11 and the charging pile 20, but this is not conducive to miniaturization of the OBC 11. In view of this, an embodiment of this application provides a charger. The charger may be used as the OBC 11 in the electric vehicle 10, or may be applied to another type of battery charging system (for example, a photovoltaic system using a solar storage architecture). This is not limited in this embodiment of this application. That the charger is used as the OBC 11 in the electric vehicle 10 is used as an example. In this embodiment of this application, the soft-start circuit does not need to be disposed in the charger, so that the soft-start can be implemented between the charger and the charging pile 20, thereby facilitating miniaturization of the charger.

Next, the charger provided in this embodiment of this application is further described by using an example based on a type of charging electric energy output by the charging pile 20.

Scenario 1: The charging pile 20 outputs direct current charging electric energy.

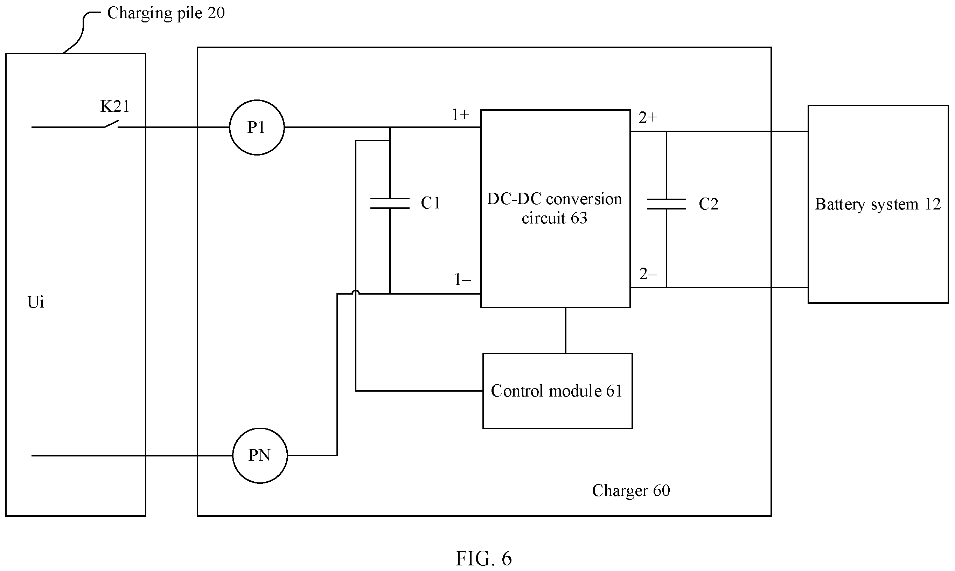

For example, as shown in FIG. 6, the charger 60 provided in this embodiment of this application mainly includes a control module 61, a DC-DC conversion circuit 63, and a capacitor C1. A high potential end 1+ of the DC-DC conversion circuit 63 is connected to a port P1 of the charger 60, and a low potential end 1- of the DC-DC conversion circuit 63 is connected to a port PN of the charger 60. In a charging process, the port P1 and the port PN may be connected to the charging pile 20. Therefore, the DC-DC conversion circuit 63 may receive, through the high potential end 1+ and the low potential end 1-, the charging electric energy output by the charging pile 20, and the charging electric energy is the direct current electric energy.

One end of the capacitor C1 is connected to the high potential end 1+ of the DC-DC conversion circuit 63, and the other end of the capacitor C1 is connected to the low potential end 1- of the DC-DC conversion circuit 63. The capacitor C1 may filter the direct current electric energy input to the DC-DC conversion circuit 63.

The control module 61 may further control the DC-DC conversion circuit 63 to perform voltage conversion. A high potential end 2+ and a low potential end 2- of the DC-DC conversion circuit 63 are respectively connected to a battery system 12. The battery system 12 includes a power battery, and the DC-DC conversion circuit 63 performs the voltage conversion on the charging electric energy, so that a voltage of the charging energy can adapt to the battery system 12. For a specific implementation process, refer to the conventional technology, and details are not described herein again.

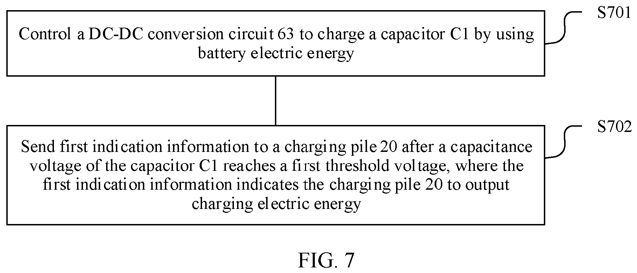

As described above, the capacitor C1 is one of main factors that cause an excessively large instantaneous current at the start of charging. To implement soft-start, the control module 61 in this embodiment of this application may perform a method shown in FIG. 7 after the charging pile 20 is connected to the charger 60. As shown in FIG. 7, the method mainly includes the following steps:
S701: The control module 61 controls the DC-DC conversion circuit 63 to charge the capacitor C1 by using battery electric energy output by the battery system 12.

Specifically, as shown in FIG. 6, the high potential end 2+ and the low potential end 2- of the DC-DC conversion circuit 63 may be connected to the battery system 12. Therefore, the control module 61 may control the DC-DC conversion circuit 63 to receive the battery electric energy output by the battery system 12.

It should be noted that the battery system 12 may include a plurality of types of batteries. For example, the battery system 12 may include the power battery, and the power battery is mainly configured to supply power to the motor 13 in the electric vehicle 10 shown in FIG. 1. The battery system 12 may also include a low-voltage battery. The low-voltage battery is mainly configured to supply power to a low-voltage load (such as a vehicle audio or an intelligent cockpit) in the electric vehicle 10. A specific source of battery electric energy provided by the battery system 12 is not limited in this embodiment of this application. For example, the battery electric energy received by the DC-DC conversion circuit 63 may come from both the power battery in the battery system 12 and the low-voltage battery in the battery system 12.

In a possible implementation, before performing S701, the control module 61 may further send second indication information to the battery system 12. After receiving the second indication information, the battery system 12 may output the battery electric energy to the DC-DC conversion circuit 63.

S702: Send first indication information to the charging pile 20 after a capacitance voltage of the capacitor C1 reaches a first threshold voltage, where the first indication information indicates the charging pile 20 to output the charging electric energy.

The first threshold voltage may be any voltage within a rated input voltage range between the high potential end 1+ and the low potential end 1- of the DC-DC conversion circuit 63. For example, if the high potential end 1+ and the low potential end 1- of the DC-DC conversion circuit 63 may support a voltage of 400 V to 800 V, the first threshold voltage may be any voltage within 400 V to 800 V
For example, when the charging electric energy received by the charger 60 is direct current electric energy, the first threshold voltage may be a voltage of the direct current electric energy. As the DC-DC conversion circuit 63 charges the capacitor C1, the capacitance voltage of the capacitor C1 gradually increases. After the capacitance voltage of the capacitor C1 reaches the first threshold voltage, it means that a difference between the capacitance voltage of the capacitor C1 and an output voltage Ui of the charging pile 20 is small.

In this case, the control module 61 sends the first indication information to the charging pile 20. After receiving the first indication information, the charging pile 20 may switch on the switch K21, to output the charging electric energy to the charger 60. Since the difference between the voltage Ui of the charging electric energy and the capacitance voltage of the capacitor C1 is small, the instantaneous current generated at the moment when the charging is started (the switch K21 is switched on) is small, thereby facilitating protection of the charger 60.

It should be noted that a specific sending manner of the first indication information is not limited in this embodiment of this application. For example, the control module 61 may establish a wired connection to the charging pile 20, to transmit the first indication information in a wired manner. The charger 60 may alternatively send the first indication information to the charging pile 20 in a wireless manner by using a wireless transmission module in the electric vehicle 10 and wireless transmission technologies such as Bluetooth (Bluetooth), wireless broadband (wireless-fidelity, Wi-Fi), a Zigbee (Zigbee) protocol, a radio frequency identification (radio frequency identification, RFID) technology, and a near field communication (near field communication, NFC) technology. These are not enumerated one by one in this embodiment of this application.

It can be learned that, before receiving the charging electric energy output by the charging pile 20, the charger 60 provided in this application may precharge the capacitor C1 by using the battery electric energy provided by the battery system 12, so that the capacitance voltage of the capacitor C1 reaches a voltage that is close to the voltage (in one scenario, it may also be understood as a voltage that is close to the output voltage of the charging pile 20) of the charging electric energy input to the DC-DC conversion circuit 63. In this case, the charger 60 indicates the charging pile 20 to start charging. Since the capacitance voltage of the capacitor C1 is close to the output voltage of the charging pile 20, the instantaneous current generated at the moment when the charging is started is small, thereby facilitating the protection of the charger 60. In this process, a soft-start circuit does not need to be disposed in the charger 60, thereby facilitating miniaturization design of the charger 60.

Scenario 2: The charging pile 20 outputs single-phase alternating current charging electric energy.

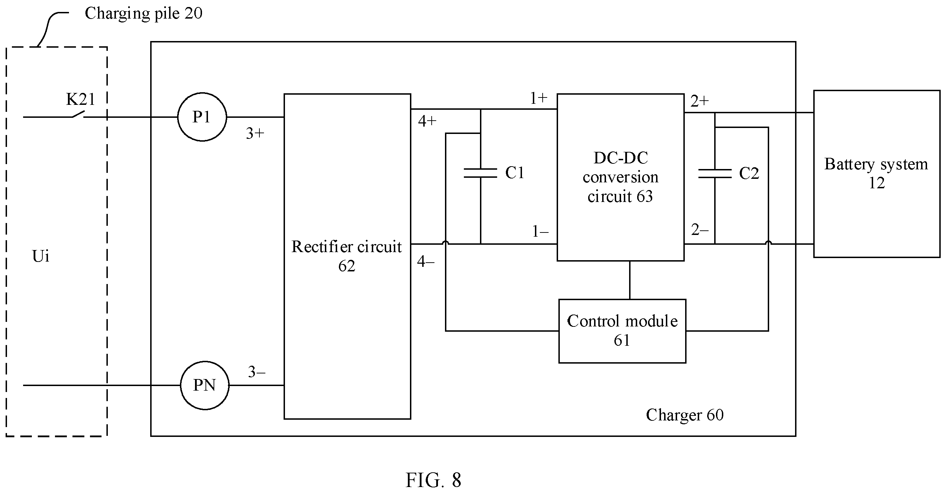

In the current market, some charging piles 20 can output the single-phase alternating current charging electric energy. To adapt to this scenario, in a possible implementation, as shown in FIG. 8, the charger 60 may further include a rectifier circuit 62. For example, the rectifier circuit 62 may be a PFC circuit, and implementation details are not described again.

An alternating current end 3+ of the rectifier circuit 62 is connected to the port P1, and an alternating current end 3- of the rectifier circuit 62 is connected to the port PN. The rectifier circuit 62 may receive the single-phase alternating current charging electric energy through the alternating current end 3+ and the alternating current end 3-. The rectifier circuit 62 rectifies the received single-phase alternating current charging electric energy, to obtain direct current charging electric energy. The rectifier circuit 62 may further output the direct current charging electric energy to the DC-DC conversion circuit 63, and the DC-DC conversion circuit 63 further performs voltage conversion on the direct current charging electric energy, to obtain direct current charging electric energy that adapts to a voltage of the power battery in the battery system 12.

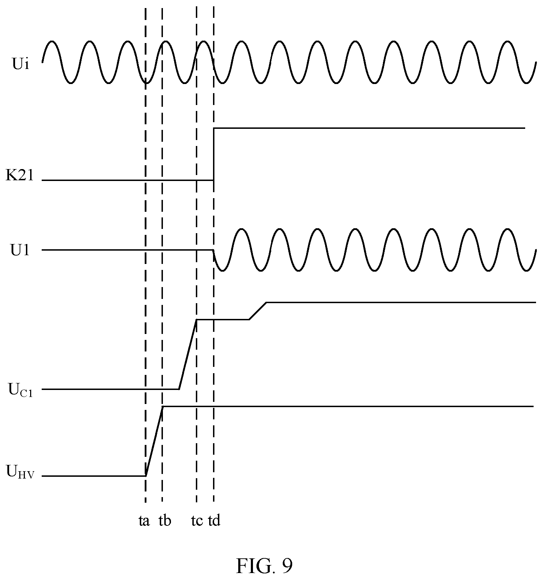

Next, based on the charger 60 shown in FIG. 8, a soft-start process applicable to this embodiment of this application is further described by using an example. FIG. 9 is a schematic diagram of an example of a voltage change between the charger 60 and the charging pile 20 in the soft-start process according to an embodiment of this application. As shown in FIG. 9 and FIG. 8, the following four time points are mainly included:

### Time point ta:

The control module 61 may send second indication information to the battery system 12, and indicate, by using the second indication information, the battery system 12 to output battery electric energy to the DC-DC conversion circuit 63. For a specific implementation process, refer to Scenario 1, and details are not described herein again.

As the battery system 12 outputs the battery electric energy, a capacitor C2 is continuously charged to gradually increase a voltage U_{HV} of the capacitor C2.

### Time point tb:

After the voltage U_{HV} of the capacitor C2 reaches a second threshold voltage, the control module 61 may control the DC-DC conversion circuit 63 to charge the capacitor C1. The second threshold voltage may be any voltage greater than or equal to a minimum input voltage between the high potential end 2+ and the low potential end 2- of the DC-DC conversion circuit 63. That is, after the voltage between the high potential end 2+ and the low potential end 2- reaches the second threshold voltage, the DC-DC conversion circuit 63 may perform voltage conversion from the battery system 12 to the rectifier circuit 62.

The control module 61 may detect the voltage of the capacitor C2. It is assumed that the voltage U_{HV} of the capacitor C2 reaches the second threshold voltage at the time point tb. The control module 61 may further control the DC-DC conversion circuit 63 to charge the capacitor C1 by using the received battery electric energy, so that a voltage U_{C1} of the capacitor C1 gradually increases.

Specifically, the control module 61 may control the DC-DC conversion circuit 63 to perform boost conversion on the battery electric energy, or may control the DC-DC conversion circuit 63 to perform buck conversion on the battery electric energy. This is not limited in this embodiment of this application. As shown in FIG. 9, after a delay after the time point tb, the voltage U_{C1} of the capacitor C1 gradually starts to increase, and the delay may be understood as a delay required by DC-DC conversion circuit 63 to start the voltage conversion.

### Time point tc:

The control module 61 may detect the voltage U_{C1} of the capacitor C1 until U_{C1} reaches a first threshold voltage. When the charging electric energy received by the charger 60 is the single-phase alternating current, the first threshold voltage may be any voltage greater than or equal to a peak voltage of the single-phase alternating current. For example, if the charging electric energy is a single-phase alternating current with a valid voltage of 220 V, the first threshold voltage may be a voltage greater than or equal to 310 V

It is assumed that U_{C1} reaches the first threshold voltage at the time point tc, the control module 61 may send first indication information to the charging pile 20.

### Time point td:

If the charging pile 20 receives the first indication information at the time point td, the charging pile 20 may switch on the switch K21 based on the first indication information, to output the charging electric energy to the charger 60, and an input voltage U1 of the rectifier circuit 62 changes to a voltage Ui of the charging electric energy. At this point, the soft-start process between the charging pile 20 and the charger 60 is completed.

After receiving the charging electric energy, the rectifier circuit 62 may rectify the charging electric energy. Usually, the rectifier circuit 62 may have a voltage boosting function, that is, an output voltage at a direct current end of the rectifier circuit 62 may be greater than the peak voltage of the single-phase alternating current. As described above, the first threshold voltage in this embodiment of this application is greater than or equal to the peak voltage of the single-phase alternating current. Therefore, the output voltage of the direct current end of the rectifier circuit 62 may be greater than the first threshold voltage, may be less than the first threshold voltage, or may be equal to the first threshold voltage.

When the output voltage of the direct current end of the rectifier circuit 62 is greater than the first threshold voltage, as shown in FIG. 9, the voltage U_{C1} of the capacitor C1 further increases to the output voltage of the direct current end of the rectifier circuit 62 after a delay after the time point td. The delay may be understood as a delay required by the rectifier circuit 62 to start the rectification. It may be understood that, when the output voltage of the direct current end of the rectifier circuit 62 is less than the first threshold voltage, the voltage U_{C1} of the capacitor C1 further reduces to the output voltage of the direct current end of the rectifier circuit 62 after the time point td.

Scenario 3: The charging pile 20 outputs three-phase alternating current charging electric energy.

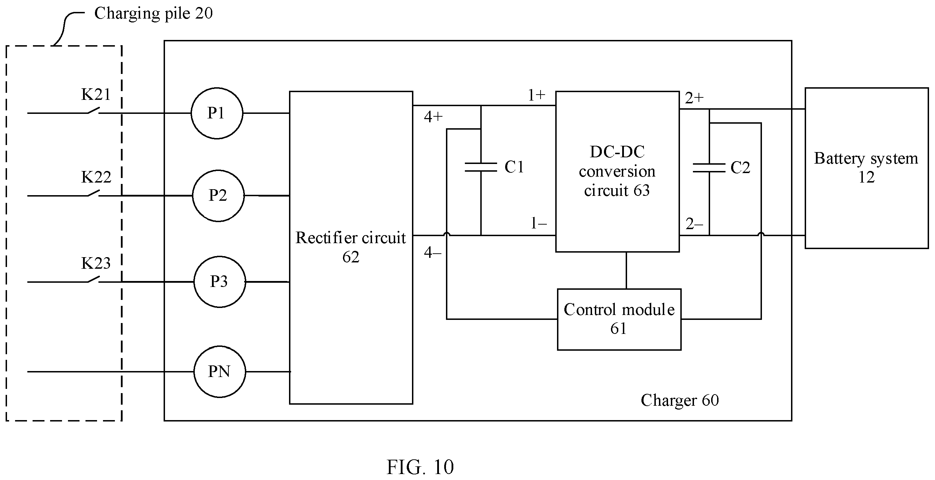

It should be noted that the charger 60 provided in this embodiment of this application may also be applicable to the three-phase alternating current charging electric energy. For example, as shown in FIG. 10, the charger 60 includes the port P1, a port P2, a port P3, and the port PN, and all the four ports are connected to the rectifier circuit 62.

The port P1 may be correspondingly connected to the switch K21 in the charging pile 20. When the switch K21 is switched on, the port P1 may receive electricity of phase A. The port P2 may be correspondingly connected to a switch K22 in the charging pile 20. When the switch K22 is switched on, the port P2 may receive electricity of phase B. The port P3 may be correspondingly connected to a switch K23 in the charging pile 20. When the switch K23 is switched on, the port P3 may receive electricity of phase C. The port PN may be connected to a zero-phase wire in the charging pile 20 to form a loop.

A soft-start process in this scenario is similar to that in Scenario 2, and details are not described again in this embodiment of this application. A different lies that when the charging electric energy received by the charger 60 is the three-phase alternating current, the first threshold voltage may be any voltage greater than or equal to a peak voltage of a line voltage of the three-phase alternating current. For example, if the charging electric energy is a three-phase alternating current with a valid voltage of 220 V, the first threshold voltage may be a voltage greater than or equal to 658 V.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A charger (11), comprising a control module (111), a DC-DC conversion circuit (113), and a first capacitor (C1), wherein
a first high potential end and a first low potential end of the DC-DC conversion circuit are configured to receive charging electric energy, and a second high potential end and a second low potential end of the DC-DC conversion circuit are configured to connect to a battery system; and
one end of the first capacitor is connected to the first high potential end of the DC-DC conversion circuit, and a second end of the first capacitor is connected to the first low potential end of the DC-DC conversion circuit; and
the control module is configured to:
control the DC-DC conversion circuit to charge the first capacitor by using battery electric energy output by the battery system; and
send first indication information to a charging pile after a voltage across the first capacitor reaches a first threshold voltage, wherein the first indication information indicates the charging pile to output the charging electric energy,
wherein a difference between the first threshold voltage and a voltage of the charging electric energy is below a threshold value,
wherein the charger further comprises a second capacitor, one end of the second capacitor is connected to the second high potential end of the DC-DC conversion circuit, and the other end of the second capacitor is connected to the second low potential end of the DC-DC conversion circuit; and
the control module is specifically configured to:
send second indication information to the battery system, wherein the second indication information indicates the battery system to output the battery electric energy to the second capacitor; and
when a voltage across the second capacitor reaches a second threshold voltage, control the DC-DC conversion circuit to charge the first capacitor by using the battery electric energy,
wherein the second threshold voltage is greater than or equal to a minimum input voltage between the second high potential end and the second low potential end of the DC-DC conversion circuit

2. The charger according to claim 1, wherein the charging electric energy output by the charging pile is alternating current electric energy;
the charger further comprises a rectifier circuit, one end of the rectifier circuit is configured to receive the charging electric energy output by the charging pile, and the other end of the rectifier circuit is connected to the DC-DC conversion circuit; and
the rectifier circuit is configured to:
convert the received charging electric energy from the alternating current electric energy into direct current electric energy, and output the converted charging electric energy to the DC-DC conversion circuit.

3. The charger according to claim 2, wherein the charging electric energy output by the charging pile is a single-phase alternating current, and the first threshold voltage is greater than or equal to a peak voltage of the charging electric energy output by the charging pile.

4. The charger according to claim 2, wherein the charging electric energy output by the charging pile is a three-phase alternating current, and the first threshold voltage is greater than or equal to a peak voltage of a line voltage of the charging electric energy output by the charging pile.

5. The charger according to claim 1, wherein the charging electric energy output by the charging pile is direct current electric energy, and the first threshold voltage is a voltage of the charging electric energy output by the charging pile.

6. A charger soft-start method, applied to a control module in a charger, wherein the charger comprises a DC-DC conversion circuit and a first capacitor, a first high potential end and a first low potential end of the DC-DC conversion circuit are configured to receive charging electric energy, a second high potential end and a second low potential end of the DC-DC conversion circuit are configured to connect to a battery system, one end of the first capacitor is connected to the first high potential end of the DC-DC conversion circuit, and a second end of the first capacitor is connected to the first low potential end of the DC-DC conversion circuit; and
the method comprises:
controlling (S701) the DC-DC conversion circuit to charge the first capacitor by using battery electric energy output by the battery system; and
sending (S702) first indication information to a charging pile after a voltage across the first capacitor reaches a first threshold voltage, wherein the first indication information indicates the charging pile to output the charging electric energy,
wherein a difference between the first threshold voltage and a voltage of the charging electric energy is below a threshold value,
wherein the charger further comprises a second capacitor, one end of the second capacitor is connected to the second high potential end of the DC-DC conversion circuit, and the other end of the second capacitor is connected to the second low potential end of the DC-DC conversion circuit; and
the controlling the DC-DC conversion circuit to charge the first capacitor by using battery electric energy output by the battery system comprises:
sending second indication information to the battery system, wherein the second indication information indicates the battery system to output the charging electric energy to the second capacitor; and
when a voltage across the second capacitor reaches a second threshold voltage, controlling the DC-DC conversion circuit to charge the first capacitor by using the battery electric energy,
wherein the second threshold voltage is greater than or equal to a minimum input voltage between the second high potential end and the second low potential end of the DC-DC conversion circuit.

7. The method according to claim 6, wherein the charging electric energy output by the charging pile is alternating current electric energy;
the charger further comprises a rectifier circuit, one end of the rectifier circuit is configured to receive the charging electric energy output by the charging pile, and the other end of the rectifier circuit is connected to the DC-DC conversion circuit; and
the rectifier circuit is configured to:
convert the received charging electric energy from the alternating current electric energy into direct current electric energy, and output the converted charging electric energy to the DC-DC conversion circuit.

8. The method according to claim 7, wherein the charging electric energy output by the charging pile is a single-phase alternating current, and the first threshold voltage is greater than or equal to a peak voltage of the charging electric energy output by the charging pile.

9. The method according to claim 7, wherein the charging electric energy output by the charging pile is a three-phase alternating current, and the first threshold voltage is greater than or equal to a peak voltage of a line voltage of the charging electric energy output by the charging pile.

10. The method according to claim 6, wherein the charging electric energy output by the charging pile is direct current electric energy, and the first threshold voltage is a voltage of the charging electric energy output by the charging pile.

11. An electric vehicle, comprising a battery system and the charger according to any one of claims 1 to 5, wherein
the charger is configured to charge a power battery in the battery system.

## Patentansprüche

1. Ladegerät (11), umfassend ein Steuermodul (111), eine DC/DC-Wandlerschaltung (113) und einen ersten Kondensator (C1), wobei ein erstes Hochspannungsende und ein erstes Niederspannungsende der DC/DC-Wandlerschaltung dazu konfiguriert sind, elektrische Energie zum Laden aufzunehmen, und ein zweites Hochspannungsende und ein zweites Niederspannungsende der DC/DC-Wandlerschaltung dazu konfiguriert sind, an ein Batteriesystem angeschlossen zu werden; und
ein Ende des ersten Kondensators an das erste Hochspannungsende der DC/DC-Wandlerschaltung angeschlossen ist und ein zweites Ende des ersten Kondensators an das erste Niederspannungsende der DC/DC-Wandlerschaltung angeschlossen ist; und
das Steuermodul zu Folgendem konfiguriert ist:
Steuern der DC/DC-Wandlerschaltung so, dass der erste Kondensator unter Verwendung der elektrischen Energie, die durch das Batteriesystem abgegeben wird, geladen wird; und
Senden von ersten Anzeigeinformationen an eine Ladesäule, nachdem eine Spannung über dem ersten Kondensator eine erste Schwellenwertspannung erreicht hat, wobei die ersten Anzeigeinformationen der Ladesäule anzeigen, die elektrische Energie zum Laden abzugeben,
wobei eine Differenz zwischen der ersten Schwellenwertspannung und einer Spannung der elektrischen Energie zum Laden unterhalb eines Schwellenwerts liegt,
wobei das Ladegerät ferner einen zweiten Kondensator umfasst, ein Ende des zweiten Kondensators an das zweite Hochspannungsende der DC/DC-Wandlerschaltung angeschlossen ist und das andere Ende des zweiten Kondensators an das zweite Niederspannungsende der DC/DC-Wandlerschaltung angeschlossen ist; und
das Steuermodul insbesondere zu Folgendem konfiguriert ist:
Senden von zweiten Anzeigeinformationen an das Batteriesystem, wobei die zweiten Anzeigeinformationen dem Batteriesystem anzeigen, die elektrische Energie der Batterie an den zweiten Kondensator abzugeben; und
wenn die Spannung am zweiten Kondensator eine zweite Schwellenwertspannung erreicht, Steuern der DC/DC-Wandlerschaltung so, dass der erste Kondensator unter Verwendung der elektrischen Energie der Batterie geladen wird,
wobei die zweite Schwellenwertspannung größer oder gleich einer minimalen Eingangsspannung zwischen dem zweiten Hochspannungsende und dem zweiten Niederspannungsende der DC/DC-Wandlerschaltung ist

2. Ladegerät nach Anspruch 1, wobei die elektrische Energie zum Laden, die durch die Ladesäule abgegeben wird, elektrische Wechselstromenergie ist;
das Ladegerät ferner eine Gleichrichterschaltung umfasst, ein Ende der Gleichrichterschaltung dazu konfiguriert ist, die elektrische Energie zum Laden, die durch die Ladesäule abgegeben wird, aufzunehmen, und das andere Ende der Gleichrichterschaltung an die DC/DC-Wandlerschaltung angeschlossen ist; und
die Gleichrichterschaltung zu Folgendem konfiguriert ist:
Umwandeln der aufgenommenen elektrischen Energie zum Laden aus der elektrischen Wechselstromenergie in elektrische Gleichstromenergie und Abgeben der umgewandelten elektrischen Energie zum Laden an die DC/DC-Wandlerschaltung.

3. Ladegerät nach Anspruch 2, wobei die elektrische Energie zum Laden, die durch die Ladesäule abgegeben wird, einphasiger Wechselstrom ist und die erste Schwellenwertspannung größer oder gleich einer Spitzenspannung der elektrischen Energie zum Laden, die durch die Ladesäule abgegeben wird, ist.

4. Ladegerät nach Anspruch 2, wobei die elektrische Energie zum Laden, die durch die Ladesäule abgegeben wird, dreiphasiger Wechselstrom ist und die erste Schwellenwertspannung größer oder gleich einer Spitzenspannung einer Netzspannung der elektrischen Energie zum Laden, die durch die Ladesäule abgegeben wird, ist.

5. Ladegerät nach Anspruch 1, wobei die elektrische Energie zum Laden, die durch die Ladesäule abgegeben wird, elektrische Gleichstromenergie ist und die erste Schwellenwertspannung eine Spannung der elektrischen Energie zum Laden, die durch die Ladesäule abgegeben wird, ist.

6. Sanftanlaufverfahren für ein Ladegerät, angewendet auf ein Steuermodul in einem Ladegerät, wobei das Ladegerät eine DC/DC-Wandlerschaltung und einen ersten Kondensator umfasst, ein erstes Hochspannungsende und ein erstes Niederspannungsende der DC/DC-Wandlerschaltung dazu konfiguriert sind, elektrische Energie zum Laden aufzunehmen, ein zweites Hochspannungsende und ein zweites Niederspannungsende der DC/DC-Wandlerschaltung dazu konfiguriert sind, an ein Batteriesystem angeschlossen zu werden, ein Ende des ersten Kondensators an das erste Hochspannungsende der DC/DC-Wandlerschaltung angeschlossen ist und ein zweites Ende des ersten Kondensators an das erste Niederspannungsende der DC/DC-Wandlerschaltung angeschlossen ist; und
das Verfahren Folgendes umfasst:
Steuern (S701) der DC/DC-Wandlerschaltung so, dass der erste Kondensator unter Verwendung der elektrischen Energie, die durch das Batteriesystem abgegeben wird, geladen wird; und
Senden (S702) von ersten Anzeigeinformationen an eine Ladesäule, nachdem eine Spannung über dem ersten Kondensator eine erste Schwellenwertspannung erreicht hat, wobei die ersten Anzeigeinformationen der Ladesäule anzeigen, die elektrische Energie zum Laden abzugeben,
wobei eine Differenz zwischen der ersten Schwellenwertspannung und einer Spannung der elektrischen Energie zum Laden unterhalb eines Schwellenwerts liegt,
wobei das Ladegerät ferner einen zweiten Kondensator umfasst, ein Ende des zweiten Kondensators an das zweite Hochspannungsende der DC/DC-Wandlerschaltung angeschlossen ist und das andere Ende des zweiten Kondensators an das zweite Niederspannungsende der DC/DC-Wandlerschaltung angeschlossen ist; und
das Steuern der DC/DC-Wandlerschaltung so, dass der erste Kondensator unter Verwendung der elektrischen Energie, die durch das Batteriesystem abgegeben wird, geladen wird, Folgendes umfasst:
Senden von zweiten Anzeigeinformationen an das Batteriesystem, wobei die zweiten Anzeigeinformationen dem Batteriesystem anzeigen, die elektrische Energie zum Laden an den zweiten Kondensator abzugeben; und
wenn die Spannung am zweiten Kondensator eine zweite Schwellenwertspannung erreicht, Steuern der DC/DC-Wandlerschaltung so, dass der erste Kondensator unter Verwendung der elektrischen Energie der Batterie geladen wird,
wobei die zweite Schwellenwertspannung größer oder gleich einer minimalen Eingangsspannung zwischen dem zweiten Hochspannungsende und dem zweiten Niederspannungsende der DC/DC-Wandlerschaltung ist.

7. Verfahren nach Anspruch 6, wobei die elektrische Energie zum Laden, die durch die Ladesäule abgegeben wird, elektrische Wechselstromenergie ist;
das Ladegerät ferner eine Gleichrichterschaltung umfasst, ein Ende der Gleichrichterschaltung dazu konfiguriert ist, die elektrische Energie zum Laden, die durch die Ladesäule abgegeben wird, aufzunehmen, und das andere Ende der Gleichrichterschaltung an die DC/DC-Wandlerschaltung angeschlossen ist; und
die Gleichrichterschaltung zu Folgendem konfiguriert ist:
Umwandeln der aufgenommenen elektrischen Energie zum Laden aus der elektrischen Wechselstromenergie in elektrische Gleichstromenergie und Abgeben der umgewandelten elektrischen Energie zum Laden an die DC/DC-Wandlerschaltung.

8. Verfahren nach Anspruch 7, wobei die elektrische Energie zum Laden, die durch die Ladesäule abgegeben wird, einphasiger Wechselstrom ist und die erste Schwellenwertspannung größer oder gleich einer Spitzenspannung der elektrischen Energie zum Laden, die durch die Ladesäule abgegeben wird, ist.

9. Verfahren nach Anspruch 7, wobei die elektrische Energie zum Laden, die durch die Ladesäule abgegeben wird, dreiphasiger Wechselstrom ist und die erste Schwellenwertspannung größer oder gleich einer Spitzenspannung einer Netzspannung der elektrischen Energie zum Laden, die durch die Ladesäule abgegeben wird, ist.

10. Verfahren nach Anspruch 6, wobei die elektrische Energie zum Laden, die durch die Ladesäule abgegeben wird, elektrische Gleichstromenergie ist und die erste Schwellenwertspannung eine Spannung der elektrischen Energie zum Laden, die durch die Ladesäule abgegeben wird, ist.

11. Elektrofahrzeug, umfassend ein Batteriesystem und das Ladegerät nach einem der Ansprüche 1 bis 5, wobei das Ladegerät zum Laden einer Leistungsbatterie in dem Batteriesystem konfiguriert ist.

## Revendications

1. Chargeur (11), comprenant un module de commande (111), un circuit de conversion CC-CC (113) et un premier condensateur (C1), dans lequel
une première extrémité à potentiel élevé et une première extrémité à potentiel bas du circuit de conversion CC-CC sont configurées pour recevoir de l'énergie électrique de charge, et une seconde extrémité à potentiel élevé et une seconde extrémité à potentiel bas du circuit de conversion CC-CC sont configurées pour se connecter à un système de batterie ; et
une extrémité du premier condensateur est connectée à la première extrémité à potentiel élevé du circuit de conversion CC-CC, et une seconde extrémité du premier condensateur est connectée à la première extrémité à potentiel bas du circuit de conversion CC-CC ; et
le module de commande est configuré pour :
commander le circuit de conversion CC-CC pour charger le premier condensateur à l'aide de l'énergie électrique de batterie fournie par le système de batterie ; et
envoyer des premières informations d'indication à une pile de charge après qu'une tension aux bornes du premier condensateur atteigne une première tension seuil, dans lequel les premières informations d'indication indiquent à la pile de charge de fournir l'énergie électrique de charge,
dans lequel une différence entre la première tension seuil et une tension de l'énergie électrique de charge est inférieure à une valeur seuil,
dans lequel le chargeur comprend également un second condensateur, une extrémité du second condensateur est connectée à la seconde extrémité à potentiel élevé du circuit de conversion CC-CC, et l'autre extrémité du second condensateur est connectée à la seconde extrémité à potentiel bas du circuit de conversion CC-CC ; et
le module de commande est spécifiquement configuré pour :
envoyer des secondes informations d'indication au système de batterie, dans lequel les secondes informations d'indication indiquent au système de batterie de fournir l'énergie électrique de batterie vers le second condensateur ; et
lorsqu'une tension aux bornes du second condensateur atteint un second seuil de tension, commander le circuit de conversion CC-CC pour charger le premier condensateur à l'aide de l'énergie électrique de batterie,
dans lequel la seconde tension seuil est supérieure ou égale à une tension d'entrée minimale entre la seconde extrémité à potentiel élevé et la seconde extrémité à potentiel bas du circuit de conversion CC-CC.

2. Chargeur selon la revendication 1, dans lequel l'énergie électrique de charge fournie par la pile de charge est de l'énergie électrique en courant alternatif ;
le chargeur comprend également un circuit redresseur, une extrémité du circuit redresseur est configurée pour recevoir l'énergie électrique de charge fournie par la pile de charge, et l'autre extrémité du circuit redresseur est connectée au circuit de conversion CC-CC ; et
le circuit redresseur est configuré pour :
convertir l'énergie électrique de charge reçue à partir de l'énergie électrique en courant alternatif en énergie électrique en courant continu, et fournir l'énergie électrique de charge convertie au circuit de conversion CC-CC.

3. Chargeur selon la revendication 2, dans lequel l'énergie électrique de charge fournie par la pile de charge est un courant alternatif monophasé, et la première tension seuil est supérieure ou égale à une tension de crête de l'énergie électrique de charge fournie par la pile de charge.

4. Chargeur selon la revendication 2, dans lequel l'énergie électrique de charge fournie par la pile de charge est un courant alternatif triphasé, et la première tension seuil est supérieure ou égale à une tension de crête d'une tension de ligne de l'énergie électrique de charge fournie par la pile de charge.

5. Chargeur selon la revendication 1, dans lequel l'énergie électrique de charge fournie par la pile de charge est de l'énergie électrique en courant continu, et la première tension seuil est une tension de l'énergie électrique de charge fournie par la pile de charge.

6. Procédé de démarrage progressif d'un chargeur, appliqué à un module de commande dans un chargeur, dans lequel le chargeur comprend un circuit de conversion CC-CC et un premier condensateur, une première extrémité à potentiel élevé et une première extrémité à potentiel bas du circuit de conversion CC-CC sont configurées pour recevoir l'énergie électrique de charge, une seconde extrémité à potentiel élevé et une seconde extrémité à potentiel bas du circuit de conversion CC-CC sont configurées pour se connecter à un système de batterie, une extrémité du premier condensateur est connectée à la première extrémité à potentiel élevé du circuit de conversion CC-CC, et une seconde extrémité du premier condensateur est connectée à la première extrémité à potentiel bas du circuit de conversion CC-CC ; et le procédé comprend :
la commande (S701) du circuit de conversion CC-CC pour charger le premier condensateur à l'aide de l'énergie électrique de batterie fournie par le système de batterie ; et
l'envoi (S702) de premières informations d'indication à une pile de charge après qu'une tension aux bornes du premier condensateur atteigne une première tension seuil, dans lequel les premières informations d'indication indiquent à la pile de charge de fournir l'énergie électrique de charge,
dans lequel une différence entre la première tension seuil et une tension de l'énergie électrique de charge est inférieure à une valeur seuil,
dans lequel le chargeur comprend également un second condensateur, une extrémité du second condensateur est connectée à la seconde extrémité à potentiel élevé du circuit de conversion CC-CC, et l'autre extrémité du second condensateur est connectée à la seconde extrémité à potentiel bas du circuit de conversion CC-CC ; et
la commande du circuit de conversion CC-CC pour charger le premier condensateur à l'aide de l'énergie électrique de batterie fournie par le système de batterie comprend :
l'envoi de secondes informations d'indication au système de batterie, dans lequel les secondes informations d'indication indiquent au système de batterie de fournir l'énergie électrique de charge vers le second condensateur ; et
lorsqu'une tension aux bornes du second condensateur atteint un second seuil de tension, la commande du circuit de conversion CC-CC pour charger le premier condensateur à l'aide de l'énergie électrique de batterie,
dans lequel la seconde tension seuil est supérieure ou égale à une tension d'entrée minimale entre la seconde extrémité à potentiel élevé et la seconde extrémité à potentiel bas du circuit de conversion CC-CC.

7. Procédé selon la revendication 6, dans lequel l'énergie électrique de charge fournie par la pile de charge est de l'énergie électrique en courant alternatif ;
le chargeur comprend également un circuit redresseur, une extrémité du circuit redresseur est configurée pour recevoir l'énergie électrique de charge fournie par la pile de charge, et l'autre extrémité du circuit redresseur est connectée au circuit de conversion CC-CC ; et
le circuit redresseur est configuré pour :
convertir l'énergie électrique de charge reçue à partir de l'énergie électrique en courant alternatif en énergie électrique en courant continu, et fournir l'énergie électrique de charge convertie au circuit de conversion CC-CC.

8. Procédé selon la revendication 7, dans lequel l'énergie électrique de charge fournie par la pile de charge est un courant alternatif monophasé, et la première tension seuil est supérieure ou égale à une tension de crête de l'énergie électrique de charge fournie par la pile de charge.

9. Procédé selon la revendication 7, dans lequel l'énergie électrique de charge fournie par la pile de charge est un courant alternatif triphasé, et la première tension seuil est supérieure ou égale à une tension de crête d'une tension de ligne de l'énergie électrique de charge fournie par la pile de charge.

10. Procédé selon la revendication 6, dans lequel l'énergie électrique de charge fournie par la pile de charge est de l'énergie électrique en courant continu, et la première tension seuil est une tension de l'énergie électrique de charge fournie par la pile de charge.

11. Véhicule électrique, comprenant un système de batterie et le chargeur selon l'une quelconque des revendications 1 à 5, dans lequel le chargeur est configuré pour charger une batterie de puissance dans le système de batterie.
